# EUROPEAN PATENT SPECIFICATION

(11) **EP 2 094 775 B1**
(45) Date of publication and mention of the grant of the patent: **08.03.2017**
(21) Application number: 07812652.1
(22) Date of filing: 06.07.2007
(51) Int. Cl.: C08K 3/30

(54) **OPTICALLY TRANSPARENT, XRAY-OPAQUE COMPOSITION, METHODS OF MANUFACTURE THEREOF AND ARTICLES COMPRISING THE SAME**
OPTISCH TRANSPARENTE, RÖNTGENOPAKE ZUSAMMENSETZUNG, HERSTELLUNGSVERFAHREN DAFÜR UND GEGENSTÄNDE DARAUS
COMPOSITION OPAQUE AUX RAYONS X ET OPTIQUEMENT TRANSPARENTE, PROCÉDÉ DE FABRICATION CORRESPONDANT ET ARTICLES LA COMPRENANT

(30) Priority: 19.12.2006 US 612774
(43) Date of publication of application: 02.09.2009
(73) Proprietor: SABIC Global Technologies B.V., 4612 PX Bergen op Zoom (NL)
(72) Inventor: CHARATI, Sanjay Gurabasappa, Bangalore, Karnataka 560071 (IN); GHOSH, Soumyadeb, Kundanhalli, Bangalore 560008 (IN); MADAN, Gautam, Meerut, Uttar Pradesh, 250002 (IN)
(74) Representative: Modiano, Micaela Nadia
(86) International application number: PCT/US2007/072903
(87) International publication number: WO 2008/076469

(56) References cited:
- WO-A-94/28948
- DE-A1- 19 756 141
- US-A- 3 608 555
- US-A- 4 588 574
- US-A- 6 057 394

## Description

### BACKGROUND

This disclosure relates to optically transparent, xray-opaque compositions, methods of manufacture thereof and articles comprising the same.

Lead filled glass is currently used to attenuate or shield living beings from harmful radiation such as xrays. Lead is toxic as well as heavy in weight. Consequently lead filled glass is also heavy. It is therefore desirable to have a composition that is xray opaque and light in weight. It is also desirable to have a composition that can be easily processed and that can be effectively and easily molded into various desired shapes upon demand.

### SUMMARY

Disclosed herein is a composition according to claim 1 comprising an organic polymer composition that comprises an organic polymer that has a refractive index of 1.60 to 1.66; and an xray absorbing filler composition that comprises barium sulfate that has been annealed to a temperature of 500 to 1,500°C.

Disclosed herein too is a method according to claim 9 for manufacturing a composition comprising annealing barium sulfate to a temperature of 500 to 1,500°C to form annealed barium sulfate; and blending an organic polymer composition with the annealed barium sulfate; wherein the organic polymer composition comprises an organic polymer that has a refractive index of 1.60 to 1.66.

Disclosed herein too is an article according to claim 13 comprising a composition having a transparency of greater than or equal to 80%, a haze of less than or equal to 40% and an xray absorption capability of greater than or equal to 5% of incident radiation when measured on a sample having a cross-sectional thickness of 2 millimeters; wherein the composition is manufactured by blending an organic polymer composition that comprise an organic polymer with an xray absorbing filler composition that comprises barium sulfate; wherein the barium sulfate has been annealed to a temperature of 500 to 1,500°C prior to the blending.

### DETAILED DESCRIPTION OF FIGURES

Figure 1 is a pictorial-graphical representation of samples containing barium sulfate that has been annealed to different temperatures;
Figure 2 is a scanning electron micrograph of a composition that contains barium sulfate that has been annealed to 150°C; and
Figure 3 is a scanning electron micrograph of a composition that contains barium sulfate that has been annealed to 800°C.

### DETAILED DESCRIPTION

Disclosed herein is a composition that comprises an organic polymer composition and a xray absorbing filler composition. In one embodiment, the composition comprises the xray absorbing filler composition in amounts that render the composition optically transparent (e.g., having an optical transparency greater than or equal to 90%) while attenuating xrays that are incident upon the composition. In another embodiment, the composition comprises the xray absorbing filler composition in amounts that render the composition partially optically transparent (e.g., having an optical transparency of 50% to 90%) while attenuating xrays that are incident upon the composition. The composition advantageously matches the refractive index of the xray absorbing filler composition with the refractive index of the polymer. The composition is light weight, lead free, and can easily be molded into desired shapes for providing protection from xrays.

In one embodiment, in one manner of matching the refractive index of the xray absorbing filler composition with the refractive index of the polymer, the xray absorbing filler composition comprises barium sulfate (BaSO₄) that is annealed at an elevated temperature of 500 to 1,500°C for a period of time of 2 to 300 minutes. Without being limited by theory, the annealing of the barium sulfate promotes a reduction of the amount of water present in the barium sulfate. The removal of water from the barium sulfate results in a reduced release of water into the organic polymer composition during the manufacturing of the composition. In one embodiment, as a result of the reduced level of water in the barium sulfate, fewer voids are produced in the composition, which improves the transparency of the composition.

As a result of the reduction in water present in the barium sulfate (due to the annealing), the refractive index of the barium sulfate particles is 1.60 to 1.66. Thus by choosing an organic polymer composition with a refractive index of 1.60 to 1.66 and blending it with the annealed barium sulfate, an optically transparent composition can be obtained.

The organic polymer composition generally comprises organic polymers having a refractive index of 1.60 to 1.66. In one embodiment, the organic polymer composition is optically transparent, i.e., it does not absorb substantial amounts of electromagnetic radiation between the wavelengths of 380 to 780 nanometers (nm). The organic polymer used in the compositions may be selected from a wide variety of thermoplastic polymers, thermosetting polymers, blends of thermoplastic polymers, or blends of thermoplastic polymers with thermosetting polymers. The organic polymer can comprise a homopolymer, a copolymer such as a star block copolymer, a graft copolymer, an alternating block copolymer or a random copolymer, ionomer, dendrimer, or a combination comprising at least one of the foregoing types of organic polymers. The organic polymer may also be a blend of polymers, copolymers, terpolymers, or the like, or a combination comprising at least one of the foregoing types of organic polymers.

In one embodiment, the organic polymer composition comprises a sulfur moiety. Examples of organic polymer compositions that comprise a sulfur moiety are polysulfones (1.6330), polyethersulfones, {poly[4,4'-isopropylidene diphenoxy di(4- phenylene)sulfone]} (1.6330), poly(2-vinylthiophene) (1.6376), poly(p-phenylene ether-sulfone) (1.6500), or the like, or a combination comprising at least one of the foregoing organic polymer compositions that comprise a sulfur moiety. The numbers in the parenthesis indicate the refractive index and are provided where available.

In another embodiment, other organic polymers with refractive indices between 1.60 to 1.66 can be used in the composition. Examples of other suitable organic polymers with refractive indices between about 1.60 to about 1.66 are polycarbonate copolymers, poly(alpha-naphthyl carbinyl methacrylate) (1.6300), polyetherimide (1.630), poly(phenyl methyl silane) (1.6300), polyimides (1.64 to 1.67), poly(2,6-diphenyl-1,4-phenylene oxide) (1.6400), poly(alpha-naphthyl methacrylate) (1.6410), or the like, or a combination comprising at least one of the foregoing polymers. The numbers in parenthesis show the refractive index of the corresponding organic polymer and are provided where available.

Exemplary organic polymers are polysulfones, polyethersulfones or polycarbonate copolymers.

It is generally desirable for the refractive index of the organic polymer composition to be as close as possible to the refractive index of the xray absorbing filler composition. In one embodiment, the refractive index of the organic polymer composition is equal to the refractive index of the xray absorbing filler composition. In one embodiment the organic polymer composition has a refractive index within 10% of the refractive index of the xray absorbing filler composition, more specifically within 5% of the refractive index of the xray absorbing filler composition, and more specifically within 2% of the refractive index of the xray absorbing filler composition. The organic polymers are generally present in an amount of 40 to 98 wt%, specifically 50 to 90 wt%, and more specifically 55 to 85 wt% of the total weight of the organic polymer composition.

The xray absorbing filler composition generally comprises barium sulfate (BaSO₄). Barium sulfate is a white crystalline solid that has a refractive index between 1.60 to 1.66. In an exemplary embodiment, the barium sulfate has a refractive index of 1.64.

As detailed above, in order to obtain a refractive index for the barium sulfate that is similar to the refractive index for the organic polymer composition, it is desirable to anneal the barium sulfate to an elevated temperature of 500 to 1,500°C for a period of time of 2 to 300 minutes. In one embodiment, it is desirable to anneal the barium sulfate to an elevated temperature of 700 to 1,200°C, specifically 800 to 1000°C.

The time period of annealing is dependent upon the mass of barium sulfate that is to be annealed. In one embodiment, it is desirable to anneal the barium sulfate for a period of time of 5 to 300 minutes, specifically 8 to 250 minutes, specifically 10 to 200 minutes. An exemplary annealing can be conducted by annealing the barium sulfate in a furnace at a temperature of 1,200°C for 10 minutes, followed by cooling.

Following annealing, the barium sulfate is ground to generate particles of barium sulfate. Following the grinding the particles of barium sulfate can be sieved to collect particles having a certain particle size. The grinding can be conducted in a ball mill, roll mill, Waring blender, Henschel mixer, or the like. The grinding can be conducted either in the dry state or the wet state. If the grinding is conducted in the wet state, the barium sulfate particles may be subjected to drying after the grinding operation.

In one embodiment, it is desirable to use barium sulfate particles having an average particle size of 1 to 1,000 micrometers, specifically 10 to 800 micrometers, more specifically 20 to 700 micrometers. An exemplary particle size is 60 micrometers.

The barium sulfate is added in amounts of 2 to 60 wt%, specifically 3 to 40 wt%, more specifically 10 to 30 wt%, and even more specifically 5 to 25 wt% of the total weight of the composition.

The xray absorbing filler composition may further optionally comprise small amounts of other secondary xray absorbing fillers. Examples of such fillers are metal particles of lead, barium, tungsten, bismuth, or the like, bismuth trioxide, bismuth oxychloride, bismuth sub-carbonate, or the like, or a combination comprising at least one of the foregoing non-metal particles.

The secondary xray absorbing fillers are generally present in amounts of up to 2 wt%, specifically less than or equal to 1.5 wt%, more specifically less than or equal to 1 wt%, and even more specifically less than or equal to 0.5 wt% of the total weight of the composition.

Other additives such as mold release agents, anti-ozonants, anti-oxidants, impact modifiers, antistatic agents, pigments, dyes, lubricants, anti-microbials, flame retardants, visual effect additives, fibers such as carbon fibers, glass fibers, carbon nanotubes, or the like; antistatic agents, plasticizers, fillers such as fumed silica, aerogels, carbon black, or the like, or a combination comprising at least one of the foregoing additives may be added to the composition if desired.

In one embodiment, in one manner of proceeding, the organic polymer composition and xray absorbing filler composition may be blended to form the composition. The blending can include dry blending, melt blending, solution blending or a combination comprising at least one of the foregoing forms of blending.

Melt blending of the composition involves the use of shear force, extensional force, compressive force, ultrasonic energy, electromagnetic energy, thermal energy or combinations comprising at least one of the foregoing forces or forms of energy and is conducted in processing equipment wherein the aforementioned forces are exerted by a single screw, multiple screws, intermeshing co-rotating or counter rotating screws, non-intermeshing co-rotating or counter rotating screws, reciprocating screws, screws with pins, barrels with pins, rolls, rams, helical rotors, or combinations comprising at least one of the foregoing.

Melt blending involving the aforementioned forces may be conducted in machines such as single or multiple screw extruders, Buss kneader, Henschel, helicones, Ross mixer, Banbury, roll mills, molding machines such as injection molding machines, vacuum forming machines, blow molding machine, or then like, or combinations comprising at least one of the foregoing machines.

In one embodiment, the organic polymer composition and xray absorbing filler composition are subjected to dry blending prior to melt blending. The dry blending may be conducted in a Henschel mixer while the melt blending may be conducted in an extruder.

In another embodiment, the organic polymer composition and xray absorbing filler composition are fed into the throat of an extruder. In yet another embodiment, the organic polymer composition is fed into the throat of the extruder, while the xray absorbing filler composition is fed into the extruder downstream of the throat. In yet another embodiment, the organic polymer composition and a first portion of the xray absorbing filler composition are fed into the throat of an extruder, while a second portion of the xray absorbing filler composition is fed into the extruder downstream of the throat. In yet another embodiment, the xray absorbing filler composition can be added to the extruder in the form of a masterbatch.

The extrudate from the extruder is cooled and pelletized. The pellets may be subjected to molding in an injection-molding machine if desired to create articles having various sizes or shapes. Exemplary articles are sheets, films, slabs, or the like. The composition can have a transparency and a haze that are dependent upon the amount of the xray absorbing filler composition. In one embodiment, the composition can have a transparency of 2 to 98% for a sample having a cross-sectional thickness of 2 millimeters when measured according to ASTM D 1003. In an exemplary embodiment, the composition can have a transparency greater than or equal to 50%, specifically greater than or equal to 65%, more specifically greater than or equal to 80%, and even more specifically greater than or equal to 95% for a sample having a cross-sectional thickness of 2 millimeters when measured according to ASTM D 1003.

The composition can have a haze of 2 to 98% for a sample having a cross-sectional thickness of 2 millimeters when measured according to ASTM D 1003. In an exemplary embodiment, the composition can have a haze of greater than or equal to 65%, specifically greater than or equal to 75%, more specifically greater than or equal to 85% and more specifically greater than or equal to 95% for a sample having a cross-sectional thickness of 2 millimeters when measured according to ASTM D 1003.

In another exemplary embodiment, the composition has a haze of less than or equal to 20%, specifically less than or equal to 15%, more specifically less than or equal to 10%, and even more specifically less than or equal to 5% for a section having a cross-sectional thickness of 2 millimeters when measured according to ASTM D 1003.

The composition can attenuate x-radiation in an amount of greater than or equal to 5%, specifically greater than or equal to 10%, more specifically greater than or equal to 15%, and even more specifically greater than or equal to 25%, when a sample having a cross-sectional thickness of 3 millimeters is subjected to x-radiation. The percentage attenuation listed above is compared with the x-radiation emanating from the original source.

The following examples, which are meant to be exemplary, illustrate compositions and methods of manufacturing of some of the various embodiments described herein.

### EXAMPLES

### Example 1

This example was conducted to demonstrate the capability of the composition to be transparent as well to absorb x-radiation. A composition comprising polysulfone and barium sulfate was blended together in an extruder and injection molded into sheets having thicknesses of either 1, 2 or 3 mm.

The polysulfone was purchased under the trade name ULTRASON^{®} (grade S2010) from BASF in Germany and was added in an amount of 95 wt%, while the barium sulfate was purchased from Aldrich Chemicals in the USA and was added in an amount of 5 wt%, where the respective weight percents are based on the weight of the composition.

The barium sulfate was annealed at three different temperatures. Samples of barium sulfate were annealed to 150°C, 800°C, 1,200°C or 1500°C for 10 minutes respectively, where temperature of the oven was ramped to the required temperature at a rate of 10°C per minute. After being cooled to room temperature, the respective samples of barium sulfate were ball milled using zirconia cylindrical balls having a combination diameters in the range of 3 millimeters to 10 millimeters. The product from the ball mill was then sieved using a 60 micrometer sieve. The respective samples of barium sulfate were then added to the throat of an extruder along with the polysulfone and extruded. The extruder had 6 barrels set at temperatures of 320°C, 330°C, 340°C, 345°C, 345°C, and 350°C respectively, wherein the aforementioned temperatures are expressed sequentially in order from the throat of the extruder to the die. The die temperature was set at 355°C. The extruder speed was set at 300 revolutions per minute (rpm). The length to diameter ratio of the screw was 24.

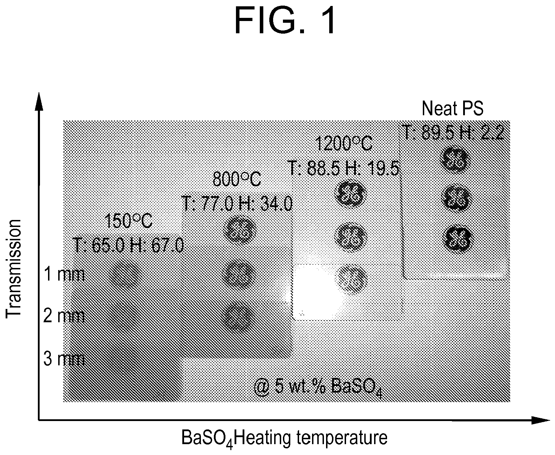

Following extrusion, the pellets were injection molded in an injection-molding machine (DEMAG^{®}, 85 Ton) manufactured by Larson & Toubro Inc. The injection-molded sheets had a thickness of either 1, 2 or 3 millimeters. The barrel temperature of the injection molding machine was set in the range of 320°C to 355°C. The mold temperature was set at 120°C. The results for the 2 millimeter samples are shown in the Table 1 while the results for the 1 millimeter samples are shown in the Figure 1.

**Table 1**

| Sample # | Annealing Temperature (°C) | Transparency(%) | Haze(%) | Clarity (%) |
|---|---|---|---|---|
| 1 | Un-annealed Un-filled polysulfone | 88.9 | 3.8 | 98.4 |
| 2 | 150 | 51.1 | 86.2 | 88.2 |
| 3 | 800 | 68 | 52.1 | 79.5 |
| 4 | 1200 | 87.2 | 26 | 59 |
| 5 | 1500 | 85.4 | 16.5 | 77.7 |

Table 1 shows the transparency of the un-annealed sample of polysulfone that does not contain any barium sulfate. From the Table 1, it may be seen that the samples containing the barium sulfate annealed at temperatures of 1,200 and 1,500°C have a transparency greater than or equal to 85% respectively. These samples also display a haze of less than or equal to 30%. From the Table 1, it may also be seen that the samples containing the barium sulfate annealed to 150°C and 800°C have transparencies of less than 70% and a haze of greater than or equal to 50%. The results from Table 1 clearly indicate that as the barium sulfate is annealed to higher temperatures, the composition has increased transparency and reduced haze.

Figure 1 shows the transparency of the compositions containing the barium sulfate annealed to 150°C, 800°C and 1200°C respectively. The compositions are molded into sheets having a thickness of 1 millimeter. The Figure 1 also shows the transparency of a sample of polysulfone that does not contain any barium sulfate. From the Figure 1, it may be seen that the sheet containing the barium sulfate annealed to 150°C is less transparent than the sheet containing the barium sulfate annealed to 800°C or 1,200°C. The sheet annealed to 1,200°C is optically transparent. The 1 mm thick sheet containing the barium sulfate annealed to 150°C has a transparency of 65% and a haze of 67%, while the 1 mm thick sheet containing the barium sulfate annealed to 800°C has a transparency of 77% and a haze of 34% and the 1 mm thick sheet containing the barium sulfate annealed to 1,200°C has a transparency of 88.5% and a haze of 19.5%.

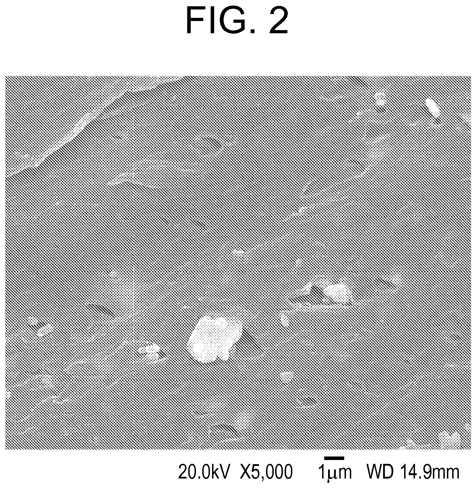

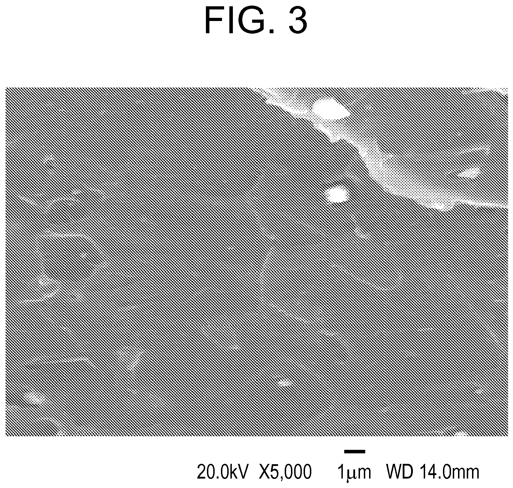

Figures 2 and 3 are scanning electron micrographs for the sheets that contain the barium sulfate annealed to 150°C and the barium sulfate annealed to 800°C respectively. From the micrographs, it may be seen that the compositions contain a large number of voids. The annealing may cause sintering of the barium sulfate promoting a reduction of the pore volume in barium sulfate. This possibly results in a reduced release of trapped air or moisture into the organic polymer composition during the manufacturing of the composition. This produces fewer voids in the composition and therefore improves the transparency. Reduction of pore volume may also promote better refractive index matching between the annealed barium sulfate and the organic polymer composition thus improving the transparency of the composition.

### Example 2

This example was conducted to demonstrate the effect of a large amount of barium sulfate on the transparency of the composition. The barium sulfate was annealed at a temperature of 1,200°C for 10 minutes. The sample had a thickness of 1 millimeter and was manufactured in a manner similar to the samples of the Example 1. Table 2 shows the properties of the composition containing 55 wt% barium sulfate.

**Table 2**

| BaSO₄ loading | Transparency(%) | Haze(%) | Clarity (%) |
|---|---|---|---|
| 55 wt% | 48 | 99.8 | 2.2 |

Comparing the results from the Table 1 above with those from the Table 2, it may be seen that by increasing the barium sulfate loading to 55 wt%, the transparency is reduced from above 85% to below 50%. The haze is also increased over the samples in the Table 1. However, it is noteworthy that even at a high filler loading of 55 wt%, the composition maintains a moderate level of transparency. The composition can therefore advantageously be used in applications such as a frosted glass. Apart from the xray attenuation, the composition also has a high specific gravity (of about 2), and hence may be used as a translucent, high specific gravity plastic.

### Example 3

This example was conducted to demonstrate the effect of the amount of barium sulfate on the ability of the composition to attenuate or to absorb xrays. The samples were manufactured as described in the Example 1. The sheets had a thickness of 2millimeters. The incident x-radiation had an intensity produced at voltages of 70 kilovolts (KV), 110 KV and 150 KV respectively.

The results for the 2 millimeter thick sheet are shown in the Table 3.

**Table 3**

| Sample # | BaSO₄ loading | Attenuation of X-rays | | |
|---|---|---|---|---|
| | | 150KV | 110KV | 70KV |
| 1 | 0 wt% | 0.8% | 1.9% | 2.8% |
| 2 | 5 wt% | 2.4% | 3.7% | 5.0% |
| 3 | 10 wt% | 4.2% | 5.8% | 9.5% |

From the Table 3, it may be seen that for the 2 millimeter sheets, as the filler loading is increased to 10 wt%, the attenuation increases to 9.5 % at 70 KV.

Thus from the above examples, it may be seen that by using the x-ray absorbing filler composition has a transparency of greater than or equal to about 85%, a haze of less than or equal to about 20% and an xray absorption capability of greater than or equal to about 5%, depending upon the amount of the filler composition used. This level of xray attenuation may be useful to produce plastic parts that are xray imageable.

When the amount of filler is greater than or equal to about 50%, the composition has transparency of less than or equal to about 85%, a haze of greater than or equal to about 50% and an xray absorption capability of greater than or equal to about 25%.

## Claims

1. A composition comprising:
an organic polymer composition that comprises an organic polymer that has a refractive index of 1.60 to 1.66, wherein the organic polymer is poly(alpha-naphthyl carbinyl methacrylate), polyetherimide, poly(phenyl methyl silane), poly[4,4'-isopropylidene diphenoxy di(4-phenylene)sulfone], poly(sulfone), poly(2-vinylthiophene), polyimide, poly(2,6-diphenyl-1,4-phenylene oxide), poly(alpha-naphthyl methacrylate), poly(p-phenylene ether-sulfone), polycarbonate copolymers, or a combination comprising at least one of the foregoing organic polymers; the organic polymer composition having a refractive index of 1.60 to 1.66; and
an xray absorbing filler that comprises barium sulfate that has been annealed to a temperature of 500 to 1,500°C.

2. The composition of Claim 1, wherein the refractive index of the organic polymer is substantially equal to the refractive index of the xray absorbing filler composition.

3. The composition of any one of Claims 1 through 2, wherein the organic polymer has a refractive index that is different from the refractive index of the xray absorbing filler composition; and wherein the difference between the refractive index of the polymer composition and the refractive index of the xray absorbing filler composition is less than 20%.

4. The composition of Claim 1, wherein the barium sulfate is annealed for 2 to 300 minutes.

5. The composition of any one of Claims 1 or 4, wherein the barium sulfate has an average particle size of 1 to 1,000 micrometers.

6. The composition of Claim 1, wherein the xray absorbing filler composition further comprises a secondary xray absorbing filler in an amount of up to 2 wt% based on the total weight of the composition and wherein the secondary xray absorbing filler is lead, barium, tungsten, bismuth, bismuth trioxide, bismuth oxychloride, bismuth sub-carbonate, or a combination comprising at least one of the foregoing secondary xray absorbing fillers.

7. The composition of any one of Claims 1 through 6, having a transparency measured according to ASTM D1003 of greater than or equal to 80%, a haze measured according to ASTM D1003 of less than or equal to about 40% and an xray absorption capability of greater than or equal to 5% of incident radiation when measured on a sample having a cross-sectional thickness of 2 millimeters.

8. An article manufactured by the composition of Claim 1.

9. A method for manufacturing a composition comprising:
annealing barium sulfate to a temperature of 500 to 1,500°C to form annealed barium sulfate; and
blending an organic polymer composition with the annealed barium sulfate;
wherein the organic polymer composition comprises an organic polymer that has a refractive index of 1.60 to 1.66, wherein the organic polymer is poly(alpha-naphthyl carbinyl methacrylate), polyetherimide, poly(phenyl methyl silane), poly[4,4'-isopropylidene diphenoxy di(4- phenylene)sulfonel, poly(sulfone), poly(2-vinylthiophene) polyimide, poly(2,6-diphenyl-1,4-phenylene oxide), poly(alpha-naphthyl methacrylate), poly(p-phenylene ether-sulfone), polycarbonate copolymers, or a combination comprising at least one of the foregoing organic polymers.

10. The method of Claim 9, wherein the blending comprising melt blending.

11. The method of Claim 9, further comprising grinding the barium sulfate to a size of 1 to 1,000 micrometers.

12. The method of Claim 9, further comprising injection molding the composition.

13. An article comprising:
a composition having a transparency of greater than or equal to 80% as measured according to ASTM D1003, a haze of less than or equal to 40% as measured according to ASTM D1003, and an xray absorption capability of greater than or equal to 5% of incident radiation when measured on a sample having a cross-sectional thickness of 2 millimeters; wherein the composition is manufactured by blending an organic polymer composition that comprise an organic polymer with an xray absorbing filler composition that comprises barium sulfate; wherein the barium sulfate has been annealed to a temperature of 500 to 1,500°C prior to the blending,
wherein the organic polymer is poly(alpha-naphthyl carbinyl methacrylate), polyetherimide, poly(phenyl methyl silane), poly[4,4'-isopropylidene diphenoxy di(4-phenylene)sulfone], poly(sulfone), poly(2-vinylthiophene), polyimide, poly(2,6-diphenyl-1,4-phenylene oxide), poly(alpha-naphthyl methacrylate), poly(p-phenylene ether-sulfone), polycarbonate copolymers, or a combination comprising at least one of the foregoing organic polymers.

## Patentansprüche

1. Eine Zusammensetzung, die Folgendes umfasst:
eine organische Polymerzusammensetzung, die ein organisches Polymer umfasst, das einen Brechungsindex von 1,60 bis 1,66 hat, worin das organische Polymer Poly(alpha-naphthylcarbinylmethacrylat), Polyetherimid, Poly(phenylmethylsilan), Poly[4,4'-isopropylidendiphenoxy di(4-Phenylen)sulfon], Poly(sulfon), Poly(2-vinylthiophen), Polyimid, Poly(2,6-diphenyl-1,4-phenylenoxid), Poly(alpha-naphthylmethacrylat), Poly(p-phenylenether-sulfon), Polycarbonatcopolymere, oder eine Kombination umfassend mindestens eines der zuvor genannten organischen Polymere ist; wobei die organische Polymerzusammensetzung einen Brechungsindex von 1,60 bis 1,66 hat; und
einen Röntgen-absobierenden Füllstoff, der Bariumsulfat umfasst, welcher weichgeglüht wurde bei einer Temperatur von 500 bis 1,500°C.

2. Die Zusammensetzung gemäß Anspruch 1, worin der Brechungsindex des organischen Polymers im Wesentlichen gleich ist mit dem Brechungsindex der Röntgen-absobierenden Füllstoffzusammensetzung.

3. Die Zusammensetzung gemäß irgendeinem der Ansprüche 1 bis 2, worin das organische Polymer einen Brechungsindex hat, der sich von dem Brechungsindex der Röntgen-absobierenden Füllstoffzusammensetzung unterscheidet; und worin der Unterschied zwischen dem Brechungsindex der Polymerzusammensetzung und dem Brechungsindex der Röntgen-absobierenden Füllstoffzusammensetzung weniger als 20% beträgt.

4. Die Zusammensetzung gemäß Anspruch 1, worin das Bariumsulfat für 2 bis 300 Minuten weichgeglüht wird.

5. Die Zusammensetzung gemäß irgendeinem der Ansprüche 1 oder 4, worin das Bariumsulfat eine durchschnittliche Partikelgröße von 1 bis 1,000 Mikrometer hat.

6. Die Zusammensetzung gemäß Anspruch 1, worin die Röntgenabsobierende Füllstoffzusammensetzung weiter einen zusätzlichen Röntgen-absobierenden Füllstoff in einer Menge von bis zu 2 Gewichtsprozent basierend auf dem Gesamtgewicht der Zusammensetzung umfasst, und worin der zusätzliche Röntgenabsobierende Füllstoff Blei, Barium, Wolfram, Bismuth, Bismuthtrioxid, Bismuthoxychlorid, Bismuth-sub-carbonat, oder eine Kombination umfassend mindestens eines der zuvor genannten zusätzlichen Röntgen-absobierenden Füllstoffe ist.

7. Die Zusammensetzung gemäß irgendeinem der Ansprüche 1 bis 6, die eine Transparenz hat, gemessen nach ASTM D1003, von größer als oder gleich 80%, eine Trübung, gemessen nach ASTM D1003, von weniger als oder gleich 40%, und eine Röntgenabsorptionsfähigkeit von größer als oder gleich 5% von einfallender Strahlung, wenn gemessen an einer Probe, die eine Querschnittsdicke von 2 Millimetern hat.

8. Ein Artikel hergestellt durch die Zusammensetzung von Anspruch 1.

9. Ein Verfahren zur Herstellung einer Zusammensetzung, das Folgendes umfasst;
Weichglühen von Bariumsulfat auf eine Temperatur von 500 bis 1,500°C, um weichgeglühtes Bariumsulfat zu bilden; und
Mischen einer organischen Polymerzusammensetzung mit dem weichgeglühten Bariumsulfat;
worin die organische Polymerzusammensetzung ein organisches Polymer umfasst, das einen Brechungsindex von 1,60 bis 1,66 hat, worin das organische Polymer Poly(alpha-naphthylcarbinylmethacrylat), Polyetherimid, Poly(phenylmethylsilan), Poly[4,4'-isopropylidendiphenoxy di(4-Phenylen)sulfon], Poly(sulfon), Poly(2-vinylthiophen), Polyimid, Poly(2,6-diphenyl-1,4-phenylenoxid), Poly(alpha-naphthylmethacrylat), Poly(p-phenylenether-sulfon), Polycarbonatcopolymere, oder eine Kombination umfassend mindestens eines der zuvor genannten organischen Polymere ist.

10. Das Verfahren gemäß Anspruch 9, worin das Mischen Schmelzmischen umfasst.

11. Das Verfahren gemäß Anspruch 9, weiter umfassend das Vermahlen des Bariumsulfats auf eine Größe von 1 bis 1,000 Mikrometer.

12. Das Verfahren gemäß Anspruch 9, weiter umfassend das Injektions-Formen der Zusammensetzung.

13. Ein Artikel, der Folgendes umfasst:
eine Zusammensetzung mit einer Transparenz von größer als oder gleich 80%, wie gemessen nach ASTM D1003, einer Trübung von weniger als oder gleich 40%, wie gemessen nach ASTM D1003, und einer Röntgenabsorptionsfähigkeit von größer als oder gleich 5% von einfallender Strahlung, wenn gemessen an einer Probe, die eine Querschnittsdicke von 2 Millimetern hat; worin die Zusammensetzung hergestellt wird durch Mischen einer organischen Polymerzusammensetzung, die ein organisches Polymer umfasst, mit einer Röntgen-absobierenden Füllstoffzusammensetzung, die Bariumsulfat umfasst; worin das Bariumsulfat weichgeglüht wurde auf eine Temperatur von 500 bis 1,500°C vor dem Mischen,
worin das organische Polymer Poly(alphanaphthylcarbinylmethacrylat), Polyetherimid, Poly(phenylmethylsilan), Poly[4,4'-isopropylidendiphenoxy di(4-Phenylen)sulfon], Poly(sulfon), Poly(2-vinylthiophen), Polyimid, Poly(2,6-diphenyl-1,4-phenylenoxid), Poly(alpha-naphthylmethacrylat), Poly(p-phenylenether-sulfon), Polycarbonatcopolymere, oder eine Kombination umfassend mindestens eines der zuvor genannten organischen Polymer ist.

## Revendications

1. Composition comprenant :
une composition de polymère organique qui comprend un polymère organique qui a un indice de réfraction de 1,60 à 1,66, dans laquelle le polymère organique est le poly(alpha-naphtyl carbinyl méthacrylate), le polyétherimide, le poly(phényl méthyl silane), la poly[4,4'-isopropylidène diphénoxy di(4-phénylène)sulfonel, la poly(sulfone), le poly(2-vinylthiophène), le polyimide, le poly(oxyde de 2,6-diphényl-1,4-phénylène), le poly(alpha-naphtyl méthacrylate), la poly(p-phénylène éther-sulfone), les copolymères de polycarbonate, ou une combinaison comprenant au moins l'un des polymères organiques précédents ; la composition de polymère organique ayant un indice de réfraction de 1,60 à 1,66 ; et
une charge absorbant les rayons X qui comprend un sulfate de baryum qui a été recuit à une température de 500 à 1 500 °C.

2. Composition selon la revendication 1, dans laquelle l'indice de réfraction du polymère organique est sensiblement égal à l'indice de réfraction de la composition de charge absorbant les rayons X.

3. Composition selon l'une quelconque des revendications 1 à 2, dans laquelle le polymère organique a un indice de réfraction qui est différent de l'indice de réfraction de la composition de charge absorbant les rayons X ; et dans laquelle la différence entre l'indice de réfraction de la composition de polymère et l'indice de réfraction de la composition de charge absorbant les rayons X est inférieure à 20 %.

4. Composition selon la revendication 1, dans laquelle le sulfate de baryum est recuit pendant 2 à 300 minutes.

5. Composition selon l'une quelconque des revendications 1 ou 4, dans laquelle le sulfate de baryum a une taille moyenne de particule de 1 à 1 000 micromètres.

6. Composition selon la revendication 1, dans laquelle la composition de charge absorbant les rayons X comprend en outre une charge absorbant les rayons X secondaire en une quantité pouvant atteindre 2 % en poids sur la base du poids total de la composition et dans laquelle la charge absorbant les rayons X secondaire est le plomb, le baryum, le tungstène, le bismuth, le trioxyde de bismuth, l'oxychlorure de bismuth, le sub-carbonate de bismuth ou une combinaison comprenant au moins l'une des charges absorbant les rayons X secondaires précédentes.

7. Composition selon l'une quelconque des revendications 1 à 6, ayant une transparence mesurée selon la norme ASTM D1003 supérieure ou égale à 80 %, un trouble mesuré selon la norme ASTM D1003 inférieur ou égal à 40 % et une capacité d'absorption des rayons X supérieure ou égale à 5 % des rayonnements incidents lorsqu'elle est mesurée sur un échantillon ayant une épaisseur de section transversale de 2 millimètres.

8. Article fabriqué à partir de la composition selon la revendication 1.

9. Procédé de fabrication d'une composition comprenant :
le recuit du sulfate de baryum à une température de 500 à 1 500 °C pour former un sulfate de baryum recuit ; et
le mélange d'une composition de polymère organique avec le sulfate de baryum recuit ; dans lequel la composition de polymère organique comprend un polymère organique qui a un indice de réfraction de 1,60 à 1,66, dans lequel le polymère organique est le poly(alpha-naphtyl carbinyl méthacrylate), le polyétherimide, le poly(phényl méthyl silane), la poly[4,4'-isopropylidène diphénoxy di(4-phénylène)sulfone], la poly(sulfone), le poly(2-vinylthiophène), le polyimide, le poly(oxyde de 2,6-diphényl-1,4-phénylène), le poly(alpha-naphtyl méthacrylate), la poly(p-phénylène éther-sulfone], les copolymères de polycarbonate, ou une combinaison comprenant au moins l'un des polymères organiques précédents.

10. Procédé selon la revendication 9, dans lequel le mélange comprend un mélange à l'état fondu.

11. Procédé selon la revendication 9, comprenant en outre le broyage du sulfate de baryum à une taille de 1 à 1 000 micromètres.

12. Procédé selon la revendication 9, comprenant en outre le moulage par injection de la composition.

13. Article comprenant :
une composition ayant un transparence supérieure ou égale à 80 % telle que mesurée selon la norme ASTM D1003, un trouble inférieur ou égal à 40 % tel que mesuré selon la norme ASTM D1003, et une capacité d'absorption des rayons X supérieure ou égale à 5 % des rayonnements incidents lorsqu'elle est mesurée sur un échantillon ayant une épaisseur de section transversale de 2 millimètres ; dans lequel la composition est fabriquée par mélange d'une composition de polymère organique qui comprend un polymère organique avec une composition de charge absorbant les rayons X qui comprend du sulfate de baryum ; dans lequel le sulfate de baryum a été recuit à une température de 500 à 1 500 °C avant le mélange,
dans lequel le polymère organique est le poly(alpha-naphtyl carbinyl méthacrylate), le polyétherimide, le poly(phényl méthyl silane), la poly[4,4'-isopropylidène diphénoxy di(4-phénylène)sulfone], la poly(sulfone), le poly(2-vinylthiophène), le polyimide, le poly(oxyde de 2,6-diphényl-1,4-phénylène), le poly(alpha-naphtyl méthacrylate), la poly(p-phénylène éther-sulfone), les copolymères de polycarbonate, ou une combinaison comprenant au moins l'un des polymères organiques précédents.
